# EUROPEAN PATENT APPLICATION

(11) **EP 1 832 947 A2**
(43) Date of publication of application: **12.09.2007**
(21) Application number: 07004786.5
(22) Date of filing: 08.03.2007
(51) Int. Cl.: G05B 19/4061, B25J 9/16

(54) **Device, program, recording medium and method for robot simulation**

(30) Priority: 10.03.2006 JP 2006066021
(71) Applicant: FANUC LTD, Minamitsuru-gun, Yamanashi 401-0597 (JP)
(72) Inventor: Oumi, Tatsuya, Minamitsuru-gun Yamanashi 401-0511 (JP); Nagatsuka, Yoshiharu, Minamitsuru-gun Yamanashi 401-0511 (JP)
(74) Representative: Thum, Bernhard

(57) **Abstract**

A robot simulation device for simulating an operation of a robot having a vision sensor in an off-line mode. The device includes a working-environment model setting section for arranging a sensor model, a robot model and a plurality of irregularly piled workpiece models in a virtual working environment; and an operation simulating section for allowing the sensor model and the robot model to simulate a workpiece detecting operation and a bin picking motion. The operation simulating section includes a workpiece-model image generating section for allowing the sensor model to pick up the workpiece models and generating a virtual image thereof; a workpiece-model position detecting section for identifying an objective workpiece model from the virtual image and detecting a virtual position thereof; and a robot-model operation controlling section for allowing the robot model to pick out the objective workpiece model based on the virtual position.

## Description

### BACKGROUND OF THE INVENTION

### 1. Field of the Invention

The present invention relates to a robot simulation device for simulating an operation of a robot having a vision sensor in an off-line mode. The present invention also relates to a program and a recording medium, for simulating an operation of a robot having a vision sensor in an off-line mode. The present invention further relates to a robot simulation method for simulating an operation of a robot having a vision sensor in an off-line mode.

### 2. Description of the Related Art

Conventionally, in a manufacturing system using a robot (in particular, an industrial robot), a workpiece handling operation, including a so-called bin picking motion in which a hand attached to an arm end of the robot operates to hold and pick-out a certain object (or a workpiece) from among objects (or workpieces) piled randomly and irregularly (i.e., in an irregularly piled state), is carried out in various situations. Typically, in the workpiece handling operation including the bin picking motion, a vision sensor mounted adjacently to the hand on the arm end of the robot identifies a workpiece to be picked out (or an objective workpiece) from among a plurality of workpieces in an irregularly piled state, and determines a position and an orientation of the objective workpiece through a three-dimensional measuring method. The robot operates to optimally move an arm thereof, based on the position and orientation data of the objective workpiece determined by the vision sensor, so as to pick out the objective workpiece from the irregularly piled workpieces.

In the bin picking motion described above, workpieces to be picked out (or objective workpieces), which are successively identified from among the randomly disposed or irregularly piled workpieces, tend to be in various positions and orientations, and therefore, a motion required by the robot arm widely varies for every objective workpiece. Therefore, typically, the robot (or an actual robot) with the vision sensor is actually operated to try the bin picking motion relative to the irregularly piled workpieces (or actual objects), so as to teach the position and orientation of the arm to the robot. In this procedure, it is typically difficult to predict a collision (or a mutual interference) between the robot itself or the workpiece held by the robot and other neighboring objects (e.g., workpieces other than the objective workpiece, a container for the workpieces, etc.). Therefore, an operation program for the workpiece handling operation, prepared by the above procedure, is one which does not consider such a mutual interference.

Typically, the robot is controlled in such a manner as to quickly detect the occurrence of a mutual interference with neighboring objects and instantaneously stop the operation. In the workpiece handling operation including the bin picking motion, such unexpected mutual interference is likely to occur, and as a result, the robot may frequently and repeatedly stop its operation, which may deteriorate working efficiency. Thus, as a conventional system, it has been proposed that, once a robot stops its operation due to, e.g., a mutual interference with neighboring objects, certain information required to analyze the cause for stopping the operation is obtained from a history of the operation of the robot, and a situation in which the robot stops its operation is reproduced by an actual robot or a simulation device, so as to enable several measures, such as the rearrangement of a working space of the robot, the correction of an operation program, etc. (e.g., see Japanese Unexamined Patent Publication (Kokai) No. 2005-103681 (JP-A-2005-103681).

The conventional robot system disclosed in JP-A-2005-103681 can improve system configuration, in a case where the robot stops its operation due to, e.g., mutual interference with neighboring objects when the robot performs, e.g., the workpiece handling operation including the bin picking motion, by reproducing the situation when the robot stops its operation. In other words, this robot system does not predict the stop of the robot operation in advance by simulation, and therefore, it is difficult for this robot system to optimize the operation program of the robot until when the operation stop actually occurs. In particular, as described above, in the workpiece handling operation including the bin picking motion, it is required for the robot to operate by variously changing the motion of the arm relative to the respective workpieces assuming various positions and orientations. Therefore, in order to optimize the operation program so as to minimize a cycle time of the workpiece handling operation, it is required to repeatedly perform the simulation in the actual robot and to calculate an average cycle time, and as a result, time and cost required to start up the system may increase.

On the other hand, for the purpose of improving an operation rate in a manufacturing site using a robot system, an off-line teaching procedure is known, in which the models of a robot and its working environment are provided in a computer, and the robot model is manipulated, on a display screen, to simulate a desired robot operation, so that position/orientation data and motion sequence data, which are to be taught to the actual robot, are thus obtained. It can be assumed that, if the above off-line teaching procedure is adopted as a teaching for the robot performing the workpiece handling operation including the bin picking motion, time and cost required for the starting-up of the system can be effectively reduced. However, no useful simulation techniques for teaching, in an off-line mode, the workpiece handling operation including the bin picking motion has yet been realized.

### SUMMARY OF THE INVENTION

It is an object of the present invention to provide a robot simulation device for simulating the operation of a robot with a vision sensor in an off-line mode, the device being capable of appropriately simulating a workpiece handling operation including a bin picking motion, and thus making it possible to quickly calculate the cycle time of the workpiece handling operation while preliminarily checking mutual interference between the robot and neighboring objects, and as a result, to prepare an optimum operation program quickly at low cost.

It is another object of the present invention to provide a program used for simulating the operation of a robot with a vision sensor in an off-line mode, the program being capable of making a computer function in such a manner as to appropriately simulate a workpiece handling operation including a bin picking motion.

It is a further object of the present invention to provide a recording medium used for simulating the operation of a robot with a vision sensor in an off-line mode, the recording medium being readable by a computer and recording a program capable of making a computer function in such a manner as to appropriately simulate a workpiece handling operation including a bin picking motion.

It is an yet further object of the present invention to provide a robot simulation method for simulating the operation of a robot with a vision sensor in an off-line mode, the device being capable of appropriately simulating a workpiece handling operation including a bin picking motion by using a computer, and thus making it possible to quickly calculate the cycle time of the workpiece handling operation while preliminarily checking mutual interference between the robot and neighboring objects and, as a result, to prepare an optimum operation program quickly at low cost.

To accomplish the above object, the present invention provides a robot simulation device for simulating an operation of a robot having a vision sensor in an off-line mode, comprising a working-environment model setting section for arranging a sensor model, a robot model and a workpiece model, prepared respectively by modeling the vision sensor, the robot and a workpiece, in a virtual working environment in a state where a plurality of workpiece models, each of which is the above-described workpiece model, are randomly piled; and an operation simulating section for allowing the sensor model and the robot model, arranged in the virtual working environment, to simulate a workpiece detecting operation and a bin picking motion, relative to the plurality of workpiece models arranged in the virtual working environment; the operation simulating section comprising a workpiece-model image generating section for allowing the sensor model to simulate an image picking-up operation relative to the plurality of workpiece models, and generating a virtual image of the plurality of workpiece models; a workpiece-model position detecting section for identifying an objective workpiece model from among the virtual image of the plurality of workpiece models generated in the workpiece-model image generating section, and detecting a virtual position of the objective workpiece model; and a robot-model operation controlling section for allowing the robot model to simulate the bin picking motion relative to the objective workpiece model, based on the virtual position of the objective workpiece model detected in the workpiece-model position detecting section.

The above robot simulation device may further comprise a cycle-time calculating section for calculating a cycle time for the workpiece detecting operation and the bin picking motion, performed by the sensor model and the robot model as a simulation allowed in the operation simulating section.

In the above configuration, the robot simulation device may further comprise a success-rate specifying section for specifying a success rate of each of the workpiece detecting operation and the bin picking motion, performed by the sensor model and the robot model as the simulation. In this configuration, the cycle-time calculating section calculates the cycle time in consideration of the success rate of each of the workpiece detecting operation and the bin picking motion, specified in the success-rate specifying section.

Also, in the above robot simulation device, the operation simulating section may allow the sensor model and the robot model to respectively simulate the workpiece detecting operation and the bin picking motion in accordance with a predetermined robot operation program.

Further, in the above robot simulation device, the workpiece-model image generating section may generate the virtual image, in a two-dimensional mode, of the plurality of workpiece models picked-up by the sensor model, based on three-dimensional data of the workpiece models.

The present invention also provides a robot simulation program used for simulating an operation of a robot having a vision sensor in an off-line mode, the program making a computer function as a) a working-environment model setting section for arranging a sensor model, a robot model and a workpiece model, prepared respectively by modeling the vision sensor, the robot and a workpiece, in a virtual working environment in a state where a plurality of workpiece models, each of which is the above-described workpiece model, are randomly piled; and b) an operation simulating section for allowing the sensor model and the robot model, arranged in the virtual working environment, to simulate a workpiece detecting operation and a bin picking motion, relative to the plurality of workpiece models arranged in the virtual working environment; the operation simulating section comprising a workpiece-model image generating section for allowing the sensor model to simulate an image picking-up operation relative to the plurality of workpiece models, and generating a virtual image of the plurality of workpiece models; a workpiece-model position detecting section for identifying an objective workpiece model from among the virtual image of the plurality of workpiece models generated in the workpiece-model image generating section, and detecting a virtual position of the objective workpiece model; and a robot-model operation controlling section for allowing the robot model to simulate the bin picking motion relative to the objective workpiece model, based on the virtual position of the objective workpiece model detected in the workpiece-model position detecting section.

The present invention further provides a computer readable recording medium used for simulating an operation of a robot having a vision sensor in an off-line mode, the recording medium recording a robot simulation program making a computer function as a) a working-environment model setting section for arranging a sensor model, a robot model and a workpiece model, prepared respectively by modeling the vision sensor, the robot and a workpiece, in a virtual working environment in a state where a plurality of workpiece models, each of which is the above-described workpiece model, are randomly piled; and b) an operation simulating section for allowing the sensor model and the robot model, arranged in the virtual working environment, to simulate a workpiece detecting operation and a bin picking motion, relative to the plurality of workpiece models arranged in the virtual working environment; the operation simulating section comprising a workpiece-model image generating section for allowing the sensor model to simulate an image picking-up operation relative to the plurality of workpiece models, and generating a virtual image of the plurality of workpiece models; a workpiece-model position detecting section for identifying an objective workpiece model from among the virtual image of the plurality of workpiece models generated in the workpiece-model image generating section, and detecting a virtual position of the objective workpiece model; and a robot-model operation controlling section for allowing the robot model to simulate the bin picking motion relative to the objective workpiece model, based on the virtual position of the objective workpiece model detected in the workpiece-model position detecting section.

The present invention yet further provides a robot simulation method for simulating an operation of a robot having a vision sensor in an off-line mode by using a computer, comprising arranging, by a working-environment model setting section of the computer, a sensor model, a robot model and a workpiece model, prepared respectively by modeling the vision sensor, the robot and a workpiece, in a virtual working environment in a state where a plurality of workpiece models, each of which is the above-described workpiece model, are randomly piled; and allowing, by an operation simulating section of the computer, the sensor model and the robot model, arranged in the virtual working environment, to simulate a workpiece detecting operation and a bin picking motion, relative to the plurality of workpiece models arranged in the virtual working environment; a simulation of the workpiece detecting operation and the bin picking motion by the sensor model and the robot model, allowed by the operation simulating section, comprising allowing the sensor model to simulate an image picking-up operation relative to the plurality of workpiece models, and generating a virtual image of the plurality of workpiece models; identifying an objective workpiece model from among the virtual image of the plurality of workpiece models as generated, and detecting a virtual position of the objective workpiece model; and allowing the robot model to simulate the bin picking motion relative to the objective workpiece model, based on the virtual position of the objective workpiece model as detected.

### BRIEF DESCRIPTION OF THE DRAWINGS

The above and other objects, features and advantages of the present invention will become more apparent from the following description of preferred embodiments in connection with the accompanying drawings, wherein:
Fig. 1 a functional block diagram showing a basic configuration of a robot simulation device according to the present invention;
Fig. 2 is an illustration schematically showing an example of a robot system, into which a robot simulation device according to the present invention is incorporated;
Fig. 3 is an illustration showing an example of a display screen of a display section capable of being additionally provided for the robot simulation device of Fig. 1;
Fig. 4 is a functional block diagram showing a configuration of a robot simulation device according to an embodiment of the present invention;
Fig. 5 is a flow chart showing an example of a simulation procedure executed by the robot simulation device of Fig. 4;
Fig. 6A is an illustration showing the virtual image of a plurality of workpiece models, as one example of a virtual image generated in the simulation flow of Fig. 5;
Fig. 6B is an illustration showing the virtual image of the workpiece models irradiated with a laser beam, as another example of a virtual image generated in the simulation flow of Fig. 5;
Fig. 6C an illustration showing the virtual image of only the laser beam, as a further example of a virtual image generated in the simulation flow of Fig. 5;
Fig. 7 is a flow chart showing a modification of a simulation procedure executed by the robot simulation device of Fig. 4; and
Fig. 8 is a flow chart showing another modification of a simulation procedure executed by the robot simulation device of Fig. 4.

### DETAILED DESCRIPTION

The embodiments of the present invention are described below, in detail, with reference to the accompanying drawings. In the drawings, the same or similar components are denoted by common reference numerals.

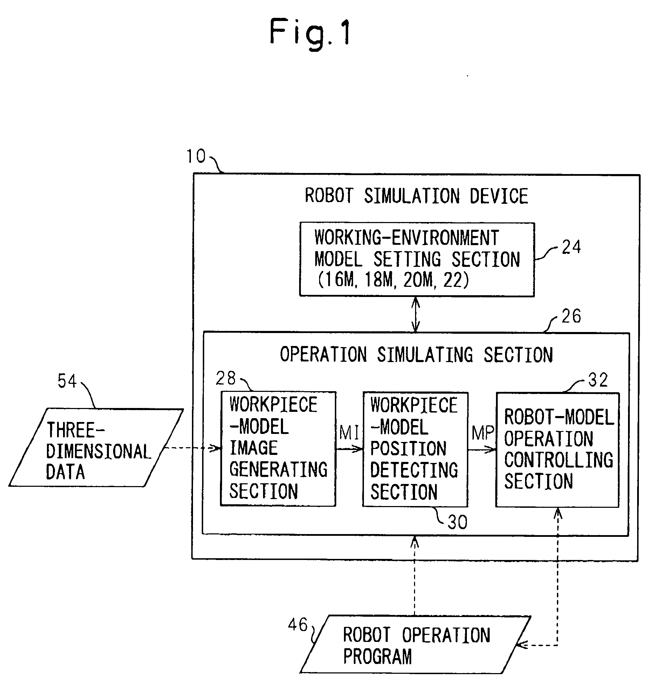

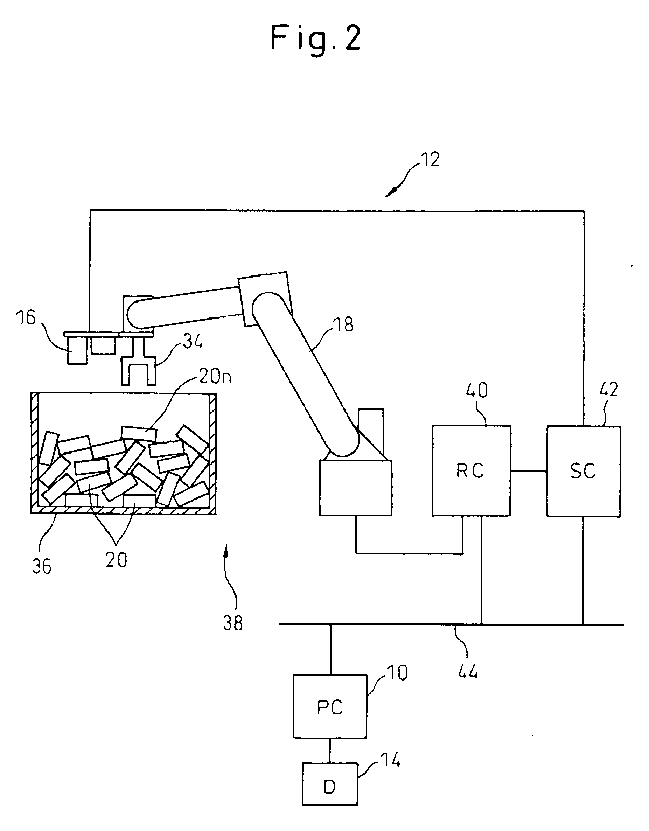

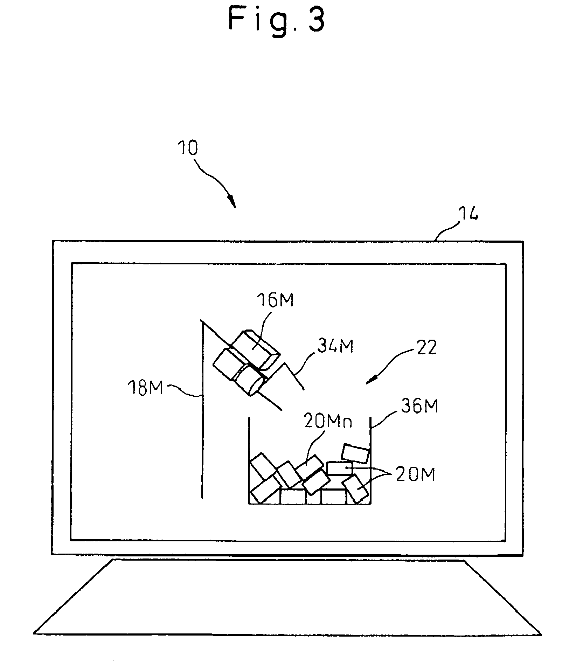

Referring to the drawings, Fig. 1 is a functional block diagram showing a basic configuration of a robot simulation device 10 according to the present invention, Fig. 2 is an illustration schematically showing an example of a robot system 12, into which the robot simulation device 10 is incorporated, and Fig. 3 is a illustration showing an example of a display screen of a display section 14 capable of being additionally provided for the robot simulation device 10. The robot simulation device 10 has a configuration for simulating an operation of a robot 18 having a vision sensor 16 in an off-line mode, and can be configured, for example, by installing desired software into a computer such as a personal computer (PC). In this connection, the robot simulation device 10 can also be considered as an off-line teaching (or off-line programming) device.

The robot simulation device 10 includes a working-environment model setting section 24 that arranges a sensor model 16M, a robot model 18M and a workpiece model 20M, which are prepared respectively by modeling the vision sensor 16, the robot 18 and a workpiece 20, in a virtual working environment 22 in a state where a plurality of workpiece models, each of which is the workpiece model 20M, are randomly and irregularly piled (i.e., in an irregularly piled state); and an operation simulating section 26 that allows the sensor model 16M and the robot model 18M, arranged in the virtual working environment 22, to simulate a workpiece detecting operation and a bin picking motion, relative to the workpiece models 20M arranged in the virtual working environment 22.

The operation simulating section 26 includes a workpiece-model image generating section 28 that allows the sensor model 16M to simulate an image picking-up operation relative to the workpiece models 20M and generates a virtual image MI of the workpiece models 20M; a workpiece-model position detecting section 30 that identifies a workpiece model 20Mn to be picked out (or an objective workpiece model 20Mn) from among the virtual image MI of the workpiece models 20M generated in the workpiece-model image generating section 28 and detects a virtual position MP of the objective workpiece model 20Mn; and a robot-model operation controlling section 32 that allows the robot model 18M to simulate the bin picking motion relative to the objective workpiece model 20Mn, based on the virtual position MP of the objective workpiece model 20Mn detected in the workpiece-model position detecting section 30. In this connection, the virtual position MP of the objective workpiece model 20Mn, detected by the workpiece-model position detecting section 30, may be data regarding either a position only or a position and an orientation.

In the robot system 12 illustrated in Fig. 2, a hand 34 as an end effector for holding the workpiece 20 is attached to the distal end of an arm of the robot 18 having a vertical articulated arm structure, and the vision sensor 16 capable of performing a three-dimensional measurement for the workpiece 20 is mounted to the arm end adjacently to the hand 34. The vision sensor 16 is configured as, for example, a range finder including an image picking-up device (e.g., a CCD camera) and a laser projector (for projecting a spot or slit beam). It should be noted that the configurations of the robot 18 and the vision sensor 16 are not limited to those described above, and other various configurations may be adopted.

A plurality of workpieces 20 are accommodated in a cage-like container 36 in an irregularly piled state, and are disposed at a predetermined position in a working environment 38 of the robot 18. Further, a robot controller (RC) 40 for controlling the motion of the robot 18 and hand 34 is connected to the robot 18, and a vision-sensor controller (SC) 42 for controlling a measuring operation for a position (or position and orientation) of the workpieces 20 is connected to the vision sensor 16. The robot controller 40 and the vision-sensor controller 42 are interconnected with each other for transmitting/receiving data or commands. The robot simulation device 10, for which the display section (D) 14 such as an LCD (Liquid Crystal Display) is provided, is connected to the robot controller 40 and the vision-sensor controller 42, via a communication line 44 such as a LAN (Local Area Network).

In accordance with a robot operation program 46 (Fig. 1), the robot 18 operates to efficiently move the arm and the hand 34, under the control of the robot controller 40, so as to hold the workpiece 20 by the hand 34 and pick out the workpiece 20 from the container 36, one-by-one from among the irregularly piled workpieces 20, and transfer the picked-out workpiece 20 to another predetermined position in the working environment 38 (i.e., the bin picking motion). On the other hand, in accordance with the robot operation program 46 (Fig. 1), the vision sensor 16 operates to first identify a workpiece 20n to be picked out (i.e., an objective workpiece 20n) through a two-dimensional measurement for the irregularly piled workpieces 20, and next determine the position (or the position and orientation) of the identified objective workpiece 20n through a three-dimensional measurement for the objective workpiece 20n, under the control of the vision-sensor controller 42 (i.e., the workpiece detecting operation). The robot 18 operates to optimally move the arm and the hand 34, based on the data of the position (or the position and orientation) of the objective workpiece 20n determined by the vision sensor 16, so as to pick out the objective workpiece 20n from the irregularly piled workpieces 20 as described above. In this connection, the robot operation program 46 is prepared on the basis of a simulation by the robot simulation device 10, and thus the data of the position (or the position and orientation) of the robot 18 (or the arm) or the hand 34 is appropriately corrected during the simulation.

Corresponding to the configuration of the robot system 12 described above, in the virtual working environment 22 set in the working-environment model setting section 24 of the robot simulation device 10, a hand model 34M for holding the workpiece model 20M is attached to the distal end of the arm of the robot model 18M, and a sensor model 16M for performing a three-dimensional measurement for the workpiece model 20M is mounted to the arm end adjacently to the hand model 34M, as shown in Fig. 3 as one example of the display screen of the display section 14. Further, the plurality of workpiece models 20M are accommodated in a container model 36M in an irregularly piled state, and are disposed at a predetermined position in the virtual working environment 22 of the robot model 18M. Regarding the data of the above-described models arranged in the virtual working environment 22, the robot simulation device 10 may be configured in such a manner as to prepare the data by a designing function such as a CAD (Computer-Aided Design) optionally provided for the robot simulation device 10, or alternatively to import and use the data prepared by an external device having a designing function such as a CAD.

In the robot simulation device 10 configured as described above, as the operation simulating section 26 makes the sensor model 16M and the robot model 18M, arranged in the virtual working environment 22, simulate the workpiece detecting operation and the bin picking motion, relative to the workpiece models 20M arranged in the virtual working environment 22, it is possible to check as to whether the robot model 18M causes mutual interference with neighboring objects (i.e., a collision between the robot model 18M or the objective workpiece model 20Mn held by the robot model 18M and the workpiece models 20M other than the objective workpiece model 20Mn, the container model 36M, etc.) during the bin picking motion (preferably, on the display screen of the display section 14). Therefore, it is possible to optimize the robot operation program 46 by appropriately correcting the data of the position (or the position and orientation) of the robot model 18M (or the hand model 34M) so as to avoid such a mutual interference.

Particularly, in the robot simulation device 10, it is very easy to repeatedly simulate the bin picking motion, while variously changing the motion of the robot model 18M and the hand model 34M relative to the respective workpiece models 20M assuming various positions and orientations. Therefore, it is possible to quickly calculate cycle time required for the workpiece handling operation relative to the workpiece models 20M, and thus to easily optimize the robot operation program 46 so as to minimize cycle time. As a result, it is possible to effectively reduce the time and cost required for the starting-up of the robot system 12 at a manufacturing site.

Thus, according to the robot simulation device 10, the workpiece handling operation including the bin picking motion can be appropriately simulated, so that it is possible to quickly calculate the cycle time of the workpiece handling operation while preliminarily checking the mutual interference between the robot 18 and neighboring objects in the actual robot system 12 and, as a result, to prepare the optimum robot operation program 46 quickly at low cost.

In the configuration described above, in which the working-environment model setting section 24 arranges the workpiece models 20M in the virtual working environment 22 in such a manner that they are accommodated within the container model 36M in the irregularly piled state, it is typically difficult to model the irregularly piled state so as to conform to the actual arrangement of the workpieces, which is difficult to be predicted even in the actual working environment 38. In this regard, the robot simulation device 10 may adopt a procedure such that, for example, the workpiece models 20M are randomly piled on the bottom of the container model 36M by using random numbers, etc., the above-described simulation is then performed relative to these workpiece models 20M, and the robot operation program 46 prepared as a result of the simulation is corrected through trial and error, whereby modeling the irregularly piled state of the workpieces which is difficult to be predicted in the actual working environment 38.

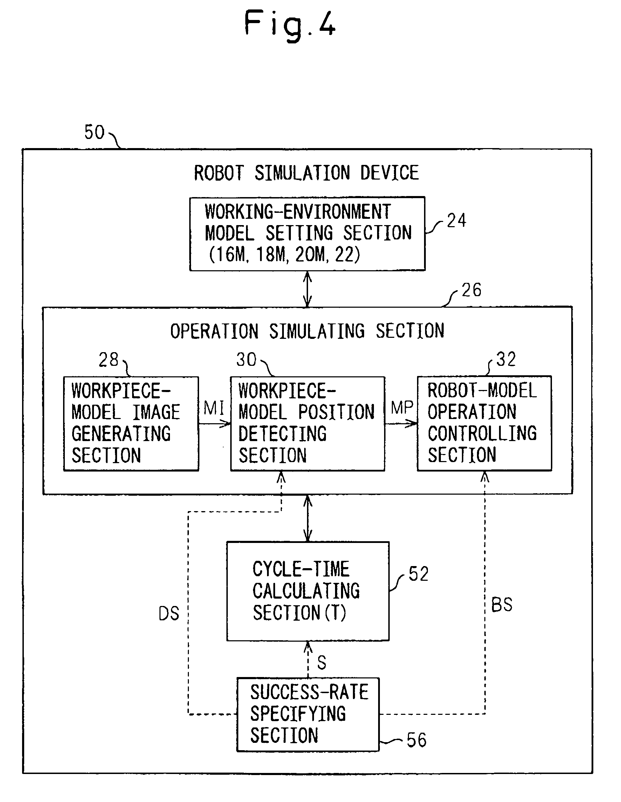

Fig. 4 shows, in a functional block diagram, a configuration of a robot simulation device 50 according to an embodiment of the present invention. The robot simulation device 50 has a basic configuration generally identical to that of the robot simulation device 10 of Fig. 1, except for a configuration enabling cycle time for the above-described workpiece handling operation to be quickly calculated, so that corresponding components are denoted by common reference numerals and the descriptions thereof are not repeated.

Thus, the robot simulation device 50 includes, in addition to the above-described basic configuration, a cycle-time calculating section 52 that calculates cycle time T as total time required for the workpiece detecting operation and the bin picking motion, performed by the sensor model 16M and robot model 18M as a simulation allowed in the operation simulating section 26. According to this configuration, the robot simulation device 50 can appropriately simulate the workpiece handling operation including the bin picking motion, and in consideration of the mutual interference between the robot 18 and neighboring objects in the actual robot system 12, can quickly calculate cycle time T for the workpiece handling operation.

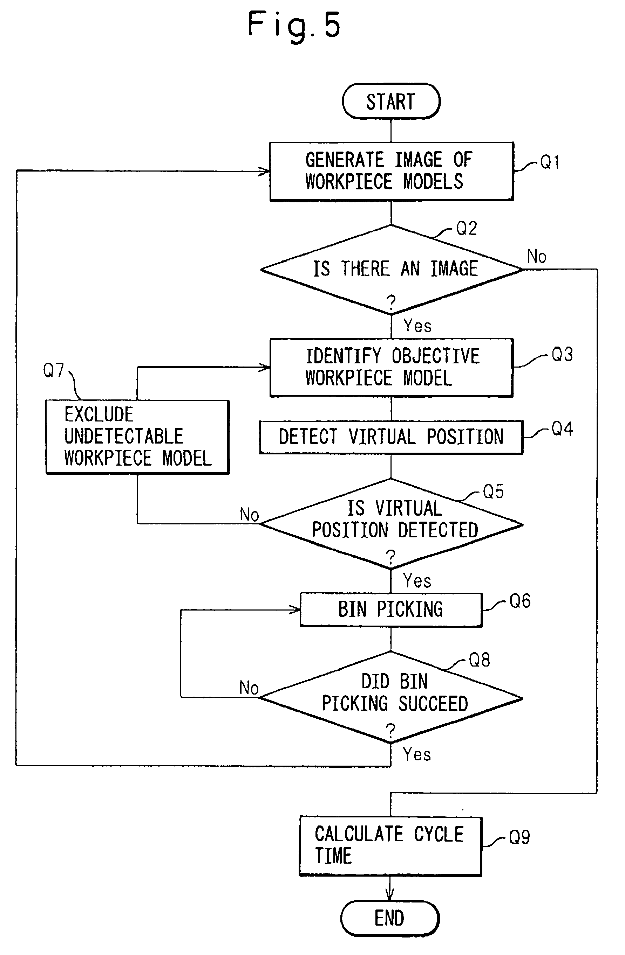

An example of a simulation procedure by the robot simulation device 50 configured as described above will be described below, with reference to the flow chart of Fig. 5.

As a precondition, it is assumed that the robot simulation device 50 is configured by installing desired software into a personal computer (PC), and the working-environment model setting section 24 and the operation simulating section 26, shown in Fig. 4, are constituted by the CPU (Central Processing Unit) of the PC. Then, in the virtual working environment 22 (Fig. 3) set by the working-environment model setting section 24, a viewing point and a direction of line of sight in a image picking-up device, as well as a beam-emitting point and a direction of projection in a laser projector, both provided in the sensor model 16M attached to the distal end of the arm of the robot model 18M, are defined, and the container model 36M accommodating a plurality of workpiece models 20M in an irregularly piled state is arranged near the robot model 18M.

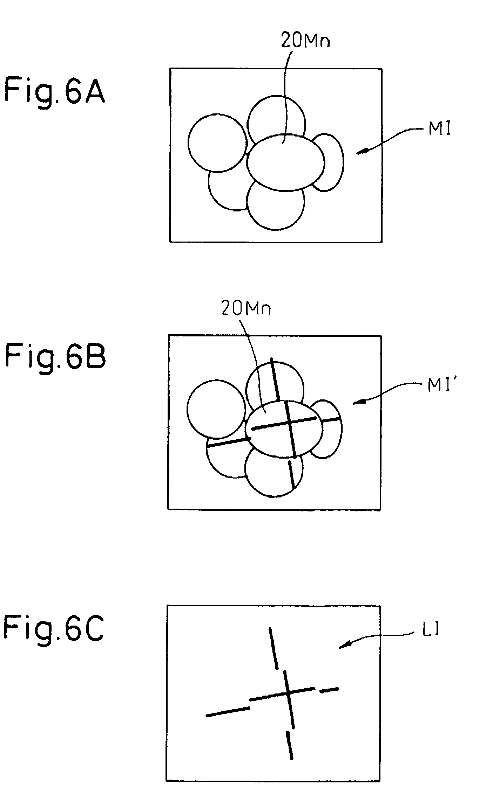

First, the operation simulating section 26 (particularly, the robot-model operation controlling section 32 (Fig. 4)) causes, on the screen of the display section 14, the robot model 18M to appropriately move the arm thereof, so as to dispose the sensor model 16M at a position above the workpiece models 20M accommodated in the container model 36M. In this state, the operation simulating section 26 (particularly, the workpiece-model image generating section 28 (Fig. 4)) allows the sensor model 16M to simulate an image picking-up operation relative to the workpiece models 20M and generates a virtual image MI (Fig. 6A) of the workpiece models 20M (step Q1).

In the above step Q1, the workpiece-model image generating section 28 can generate, in a two-dimensional mode, the virtual image MI of the workpiece models 20M as obtained by the sensor model 16M, on the basis of the three-dimensional data 54 (Fig. 1) of the workpiece model 20M. In this connection, the three-dimensional data 54 of the workpiece model 20M, previously prepared by a designing function such as a CAD (Computer-Aided Design) and stored in the robot simulation device 50 itself or an external storage device, may be used. Also, the virtual image MI can be generated by a common computer graphics technique, on the basis of the viewing point and the direction of line of sight in the image picking-up device of the sensor model 16M, as well as the above-described three-dimensional data 54.

Next, the workpiece-model position detecting section 30 (Fig. 4) judges whether the virtual image MI of one or more workpiece models 20M has been generated in step Q1 (step Q2), and if the virtual image MI of one or more workpiece models 20M has been generated, identifies the objective workpiece model 20Mn (Fig. 3) from the virtual image MI (step Q3). In above steps Q2 and Q3, it is possible to simulate a two-dimensional measuring method which is generally performed by the vision-sensor controller 42 (Fig. 2) for identifying the objective workpiece 20n from the image obtained by the vision sensor 16 (Fig. 2) in the actual working environment 38 (Fig. 2). Typically, a workpiece model 20M located at the uppermost position among the irregularly piled workpiece models 20M is identified as the objective workpiece model 20Mn. On the other hand, if it is judged, in step Q2, that no virtual image MI has been generated, it is considered that no workpiece model 20M is accommodated in the container model 36M, and thereby the process proceeds to a cycle-time calculation step Q9 described later.

After the objective workpiece model 20Mn is identified in step Q3, the robot-model operation controlling section 32 again causes, on the screen of the display section 14, the robot model 18M to appropriately move the arm thereof, so as to dispose the sensor model 16M at a position where the sensor model 16M can irradiate the objective workpiece model 20Mn with a laser beam. In this state, the workpiece-model image generating section 28 allows the sensor model 16M to simulate the image picking-up operation relative to the workpiece models 20M so as to generate again the virtual image MI, and also generates, on the basis of the virtual image MI, a virtual image MI' (Fig. 6B) of the workpiece models 20M, with the objective workpiece model 20Mn being disposed generally at center, at the instant the laser projector of the sensor model 16M simulates to irradiate the workpiece models 20M with the laser beam (e.g., a slit beam). Then, the workpiece-model position detecting section 30 extracts, from the virtual image MI', the image data of the objective workpiece model 20Mn irradiated with the laser beam, and detects the virtual position MP (i.e., position data or position and orientation data) of the objective workpiece model 20Mn (step Q4).

In the above step Q4, the workpiece-model image generating section 28 can generate, in a two dimensional mode, the virtual image MI' of the workpiece models 20M, with the objective workpiece model 20Mn being generally at center, at the instant the workpiece models 20M are irradiated with the laser beam, on the basis of the three-dimensional data 54 (Fig. 1) of the workpiece models 20M. The virtual image MI' can be generated by a common computer graphics technique, on the basis of the viewing point and the direction of line of sight in the image picking-up device and the beam-emitting point and the direction of projection in the laser projector, both provided in the sensor model 16M, as well as the above-described three-dimensional data 54. Further, the workpiece-model position detecting section 30 can simulate a three-dimensional measuring method which is generally performed by the vision-sensor controller 42 (Fig. 2) in order to make the vision sensor 16 (Fig. 2) detect the position (or the position and orientation) of the objective workpiece 20n in the actual working environment 38 (Fig. 2). More specifically, an XOR operation is performed between the virtual image MI before irradiation with the laser beam and the virtual image MI' after the irradiation with the laser beam, so as to extract a virtual image LI of only the laser beam projected on the workpiece models 20M (Fig. 6C), and thus the virtual position MP of the objective workpiece model 20Mn is detected from the virtual image LI of the laser beam.

Next, the workpiece-model position detecting section 30 judges whether or not the virtual position MP of the objective workpiece model 20Mn has been detected in step Q4 (step Q5). If the virtual position MP of the objective workpiece model 20Mn has been detected, the robot-model operation controlling section 32 causes, on the screen of the display section 14, the robot model 18M and the hand model 34M to appropriately move, and thus to simulate the bin picking motion relative to the objective workpiece model 20Mn (step Q6). On the other hand, if it is judged that the virtual position MP of the objective workpiece model 20Mn has not been detected, it is considered that the three-dimensional measurement has failed and the image data of the identified objective workpiece model 20Mn is excluded from the data of the virtual image MI (step Q7). Then, the process returns to the above-described step Q3 so as to identify a new objective workpiece model 20Mn, and the three-dimensional measurement is again performed.

Next, the robot-model operation controlling section 32 judges whether or not the objective workpiece model 20Mn has been properly picked up in step Q6 (step Q8). If the objective workpiece model 20Mn has been properly picked up, the process returns to the above-described step Q1, and the operation simulating section 26 performs the workpiece detecting operation and the bin picking motion, defined in steps Q1 to Q8, relative to the remaining workpiece models 20M. On the other hand, if it is judged that the objective workpiece model 20Mn has not been properly picked up, it is considered that the bin picking motion has failed, and therefore, the process returns to the above-described step Q6 so as to retry the bin picking motion relative to the objective workpiece model 20Mn as identified.

As described above, steps Q1 to Q8 are repeatedly performed until it is judged, in step Q2, that there is no image of the workpiece model 20M. If it is judged, in step Q2, that there is no image of the workpiece model 20M, the cycle-time calculating section 52 calculates the cycle time T for the workpiece detecting operation and the bin picking motion, relative to the workpiece models 20M (step Q9). Thus, the simulation procedure terminates.

In the above-described simulation flow, it is advantageous that the robot-model operation controlling section 32 of the operation simulating section 26 allows the robot model 18M (including the hand model 34M) to simulate a certain motion in accordance with the robot operation program 46 (Fig. 1) as previously determined (i.e., before the data correction executed correspondingly to the detection of position of the objective workpiece model 20Mn, relative to which the robot model simulates the motion). In this configuration, the robot-model operation controlling section 32 can correct the robot operation program 46 so as to correspond to the virtual position MP of the objective workpiece model 20Mn detected in the workpiece-model position detecting section 30, and allows the robot model 18M (including the hand model 34M) to simulate the bin picking motion in accordance with the corrected robot operation program 46. Similarly, in the above-described simulation flow, it is advantageous that the workpiece-model image generating section 28 and the workpiece-model position detecting section 30, in the operation simulating section 26, allows the sensor model 16M to simulate the workpiece detecting operation in accordance with the robot operation program 46 (Fig. 1) as previously determined (i.e., before the data correction executed correspondingly to the detection of position of the objective workpiece model 20Mn, relative to which the sensor model simulates the operation). According to these configurations, it is possible to facilitate the automatization of the off-line programming procedure for the robot operation program 46.

Incidentally, in the actual workpiece handling operation performed by the robot system 12 (Fig. 2), it may be predicted, in the position detecting step and the bin picking step relative to the objective workpiece 20n, that the three-dimensional measurement and the picking motion may fail, due to the detection error of the laser beam, interference with neighboring objects with the workpiece being held, and so on. To deal with this problem, the robot controller 40 (Fig. 2) is typically configured to make the robot 18 (Fig. 2) retry the three-dimensional measurement and the picking motion relative to the objective workpiece 20n. As a result, the cycle time for the workpiece handling operation will inevitably increase.

In connection with the above situation, the robot simulation device 50 is configured, as described by the simulation flow, even when the three-dimensional measurement and the picking motion fail respectively in the virtual position detecting step Q4 and the bin picking step Q6 relative to the objective workpiece model 20Mn, in such a manner as to appropriately cope with such a failure and advance the simulation. In this connection, if the frequency of the failure (i.e., a success rate) of the three-dimensional measurement and the picking motion is previously provided as data and the simulation is performed to accord with the success rate, an advantage may be obtained, in which a cycle time conforming to actual circumstances can be calculated as a result of a simulation that more closely resembles the actual workpiece handling operation.

In order to execute the above-described simulation in which the success rate of the robot operation is quantitatively considered in advance, the robot simulation device 50 may further include a success-rate specifying section 56 that specifies the success rate S of each of the workpiece detecting operation and the bin picking motion, performed by the sensor model 16M and the robot model 18M as the simulation allowed in the operation simulating section 26, as additionally shown in Fig. 4. In this configuration, the cycle-time calculating section 52 calculates the cycle time T in consideration of the success rate S of each of the workpiece detecting operation and bin picking motion, specified in the success-rate specifying section 56.

More specifically, the workpiece-model position detecting section 30 and the robot-model operation controlling section 32 can be configured to retry the workpiece detecting operation and the bin picking motion (i.e., steps Q5 → Q7 → Q3, and steps Q8 → Q6, in Fig. 5), based on the success rate DS, BS of each of the workpiece detecting operation and bin picking motion, that are specified in the success-rate specifying section 56. Then, the cycle-time calculating section 52 calculates the cycle time T by adding a time required for retrying the workpiece detecting operation and bin picking motion.

For example, if the success-rate specifying section 56 specifies the success rate DS of the workpiece detecting operation to 90%, the workpiece-model position detecting section 30 executes, during the simulation of the operation relative to all the workpiece models 20M (Fig. 5), a retrying operation flow defined by steps Q5 → Q7 → Q3, while simulating to fail in the three-dimensional measurement at the rate of 10%. Similarly, if the success-rate specifying section 56 specifies the success rate BS of the bin picking motion to 85%, the robot-model operation controlling section 32 executes, during the simulation of the operation relative to all the workpiece models 20M (Fig. 5), a retrying operation flow defined by steps Q8 → Q6, while simulating to fail in the picking motion at the rate of 15%. As a result, the cycle-time calculating section 52 can calculate the cycle time T including the time for retrying the workpiece detecting operation and bin picking motion.

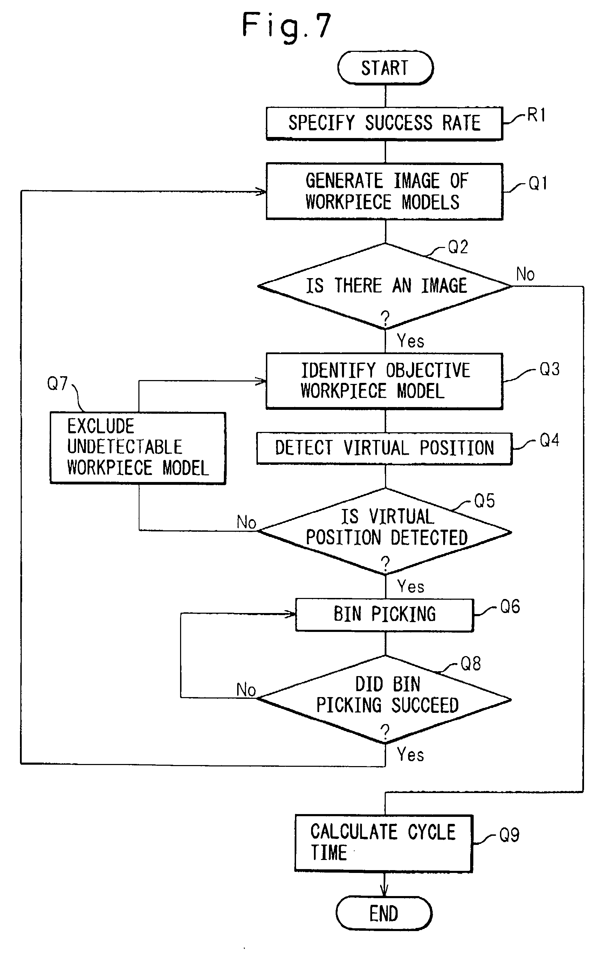

The above-described simulation procedure performed by the robot simulation device 50, having the success-rate specifying section 56, can be represented by the flow chart of Fig. 7. In the illustrated simulation flow, the success-rate specifying section 56 first specifies the respective success rates DS and BS of the workpiece detecting operation and the bin picking motion (step R1). Thereafter, the operation simulating section 26 performs the above-described steps Q1 to Q9, while taking the success rates DS, BS specified in step R1 into consideration.

In the above-described configuration, it is advantageous that the success-rate specifying section 56 can specify a desired range of the success rate DS, BS of each of the workpiece detecting operation and bin picking motion. In this configuration, the cycle-time calculating section 52 calculates the cycle time T in a given range, corresponding to the desired range of the success rate DS, BS specified in the success-rate specifying section 56. According to this configuration, it is possible to determine the respective success rates DS and BS of the workpiece detecting operation and bin picking motion, which can ensure the required cycle time T, within the respective ranges specified in the success-rate specifying section 56. In particular, if several success-rate combinations, each combination including the success rate DS of the workpiece detecting operation and the success rate BS of the bin picking motion within the specified ranges, are previously set, it is possible to easily check as to which combination of success rates DS and BS ensures the allowable cycle time T. The success rates DS and BS thus determined, which are in an allowable range, can be used as a measure to reconsider the working environment 38 of the robot 18 or to correct the robot operation program 46 in the actual robot system 12 (Fig. 2).

For example, if the success-rate specifying section 56 specifies each of the success rates DS and BS of the workpiece detecting operation and the bin picking motion as a range less than 100%, but not less than 90%, it is possible, by subdividing the range of each success rate DS, BS at every 1%, to prepare 100 combinations of the success rates DS and BS in total. It is advantageous that the success-rate specifying section 56 can also freely specify the unit or reference value of subdivision (1%, in the above example). Then, the workpiece-model position detecting section 30 and the robot-model operation controlling section 32 perform the simulation including the retrying operation flow in accordance with the desired combination of success rates DS and BS, during the simulation of operation relative to all the workpiece models 20M (Fig. 5), and the cycle-time calculating section 52 calculates the cycle time T including the time for the retrying operation performed under the combination of success rates DS and BS. Thus, after the simulation including the retrying operation flow according to all the combinations of success rates DS and BS is completed relative to all the workpiece models 20M, a plurality of (100, in the above example) cycle times T corresponding respectively to all combinations of success rates DS and BS are calculated. Therefore, when a required cycle time T is indicated from among the calculated cycle times T, it is possible to specify a combination of success rates DS and BS for the workpiece detecting operation and the bin picking motion, which can realize the indicated cycle time.

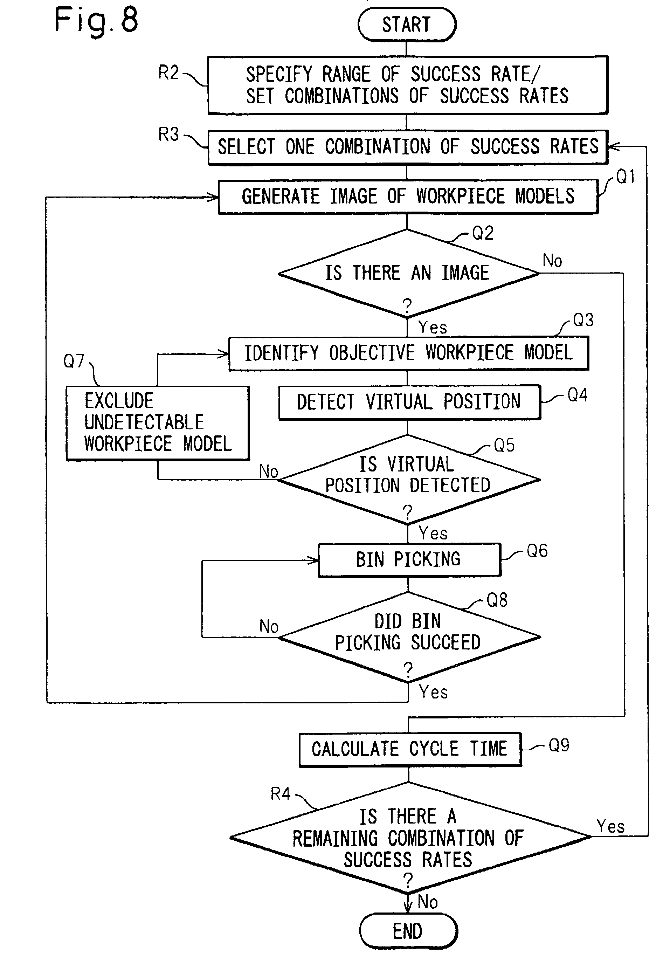

The above-described simulation procedure for determining the allowable combination of the success rates DS and BS can be represented by the flow chart of Fig. 8. In the illustrated simulation flow, the success-rate specifying section 56 first specifies the desired ranges of the respective success rates DS and BS of the workpiece detecting operation and the bin picking motion, and appropriately subdivides the specified ranges of the success rates DS, BS so as to prepare several types of combinations of success rates DS and BS (step R2). Then, the operation simulating section 26 selects one combination of success rates DS and BS (step R3), and thereafter performs the above-described steps Q1 to Q9, while taking the success rates DS, BS selected in step R3 into consideration. After the cycle time is calculated in step Q9, the operation simulating section 26 judges whether there is a remaining combination of success rates DS, BS (step R4). If there is a remaining combination, the process returns to step R3 so as to select the next combination of success rates DS, BS, however if there is no remaining combination, the simulation procedure terminates.

While the preferred embodiments of the present invention have been explained above, it is also possible to define the present invention in the other categories, from the viewpoint that the robot simulation device 10 can be configured by a personal computer, as follows:

The present invention provides a robot simulation program used for simulating an operation of a robot 18 having a vision sensor 16 in an off-line mode, the program making a computer 10 function as: a) a working-environment model setting section 24 for arranging a sensor model 16M, a robot model 18M and a workpiece model 20M, prepared respectively by modeling the vision sensor 16, the robot 18 and a workpiece 20, in a virtual working environment 22 in a state where a plurality of workpiece models, each of which is the workpiece model 20M, are randomly piled; and b) an operation simulating section 26 for allowing the sensor model 16M and the robot model 18M, arranged in the virtual working environment 22, to simulate a workpiece detecting operation and a bin picking motion, relative to the plurality of workpiece models 20M arranged in the virtual working environment 22; the operation simulating section 26 including a workpiece-model image generating section 28 for allowing the sensor model 16M to simulate an image picking-up operation relative to the plurality of workpiece models 20M, and generating a virtual image MI of the plurality of workpiece models 20M; a workpiece-model position detecting section 30 for identifying an objective workpiece model 20Mn from among the virtual image MI of the plurality of workpiece models 20M generated in the workpiece-model image generating section 28, and detecting a virtual position MP of the objective workpiece model 20Mn; and a robot-model operation controlling section 32 for allowing the robot model 18M to simulate the bin picking motion relative to the objective workpiece model 20Mn, based on the virtual position MP of the objective workpiece model 20Mn detected in the workpiece-model position detecting section 30.

The present invention also provides a computer readable recording medium used for simulating an operation of a robot 18 having a vision sensor 16 in an off-line mode, the recording medium recording a robot simulation program making a computer 10 function as: a) a working-environment model setting section 24 for arranging a sensor model 16M, a robot model 18M and a workpiece model 20M, prepared respectively by modeling the vision sensor 16, the robot 18 and a workpiece 20, in a virtual working environment 22 in a state where a plurality of workpiece models, each of which is the workpiece model 20M, are randomly piled; and b) an operation simulating section 26 for allowing the sensor model 16M and the robot model 18M, arranged in the virtual working environment 22, to simulate a workpiece detecting operation and a bin picking motion, relative to the plurality of workpiece models 20M arranged in the virtual working environment 22; the operation simulating section 26 including a workpiece-model image generating section 28 for allowing the sensor model 16M to simulate an image picking-up operation relative to the plurality of workpiece models 20M, and generating a virtual image MI of the plurality of workpiece models 20M; a workpiece-model position detecting section 30 for identifying an objective workpiece model 20Mn from among the virtual image MI of the plurality of workpiece models 20M generated in the workpiece-model image generating section 28, and detecting a virtual position MP of the objective workpiece model 20Mn; and a robot-model operation controlling section 32 for allowing the robot model 18M to simulate the bin picking motion relative to the objective workpiece model 20Mn, based on the virtual position MP of the objective workpiece model 20Mn detected in the workpiece-model position detecting section 30.

The present invention further provides a robot simulation method for simulating an operation of a robot 18 having a vision sensor 16 in an off-line mode by using a computer 10, including: a working-environment model setting step for arranging, by a working-environment model setting section 24 of the computer 10, a sensor model 16M, a robot model 18M and a workpiece model 20M, prepared respectively by modeling the vision sensor 16, the robot 18 and a workpiece 20, in a virtual working environment 22 in a state where a plurality of workpiece models, each of which is the workpiece model 20M, are randomly piled; and an operation simulating step for allowing, by an operation simulating section 26 of the computer 10, the sensor model 16M and the robot model 18M, arranged in the virtual working environment 22, to simulate a workpiece detecting operation and a bin picking motion, relative to the plurality of workpiece models 20M arranged in the virtual working environment 22; the operation simulating step comprising the steps of: allowing the sensor model 16M to simulate an image picking-up operation relative to the plurality of workpiece models 20M, and generating a virtual image MI of the plurality of workpiece models 20M; identifying an objective workpiece model 20Mn from among the virtual image MI of the plurality of workpiece models 20M as generated, and detecting a virtual position MP of the objective workpiece model 20Mn; and allowing the robot model 18M to simulate the bin picking motion relative to the objective workpiece model 20Mn, based on the virtual position MP of the objective workpiece model 20Mn as detected.

While the invention has been described with reference to specific preferred embodiments, it will be understood, by those skilled in the art, that various changes and modifications may be made thereto without departing from the scope of the following claims.

## Claims

1. A robot simulation device (10; 50) for simulating an operation of a robot having a vision sensor in an off-line mode, **characterized in that** said device comprising:
a working-environment model setting section (24) for arranging a sensor model (16M), a robot model (18M) and a workpiece model (20M), prepared respectively by modeling the vision sensor (16), the robot (18) and a workpiece (20), in a virtual working environment (22) in a state where a plurality of workpiece models are randomly piled; and
an operation simulating section (26) for allowing said sensor model and said robot model, arranged in said virtual working environment, to simulate a workpiece detecting operation and a bin picking motion, relative to said plurality of workpiece models arranged in said virtual working environment;
said operation simulating section comprising:
a workpiece-model image generating section (28) for allowing said sensor model to simulate an image picking-up operation relative to said plurality of workpiece models, and generating a virtual image of said plurality of workpiece models;
a workpiece-model position detecting section (30) for identifying an objective workpiece model (20Mn) from among said virtual image of said plurality of workpiece models generated in said workpiece-model image generating section, and detecting a virtual position of said objective workpiece model; and
a robot-model operation controlling section (32) for allowing said robot model to simulate said bin picking motion relative to said objective workpiece model, based on said virtual position of said objective workpiece model detected in said workpiece-model position detecting section.

2. A robot simulation device as set forth in claim 1, further comprising a cycle-time calculating section (52) for calculating a cycle time for said workpiece detecting operation and said bin picking motion, performed by said sensor model and said robot model as a simulation allowed in said operation simulating section.

3. A robot simulation device as set forth in claim 2, further comprising a success-rate specifying section (56) for specifying a success rate of each of said workpiece detecting operation and said bin picking motion, performed by said sensor model and said robot model as said simulation; wherein said cycle-time calculating section calculates said cycle time in consideration of said success rate of each of said workpiece detecting operation and said bin picking motion, specified in said success-rate specifying section.

4. A robot simulation device as set forth in claim 3, wherein said workpiece-model position detecting section and said robot-model operation controlling section retry said workpiece detecting operation and said bin picking motion, based on said success rate of each of said workpiece detecting operation and said bin picking motion, specified in said success-rate specifying section; and wherein said cycle-time calculating section calculates said cycle time by adding a time required for retrying said workpiece detecting operation and a time required for said bin picking motion.

5. A robot simulation device as set forth in claim 3, wherein said success-rate specifying section specifies a desired range of said success rate of each of said workpiece detecting operation and said bin picking motion; and wherein said cycle-time calculating section calculates said cycle time in a given range, correspondingly to said desired range of said success rate specified in said success-rate specifying section.

6. A robot simulation device as set forth in any one of claims 1 to 5, wherein said operation simulating section allows said sensor model and said robot model to respectively simulate said workpiece detecting operation and said bin picking motion in accordance with a predetermined robot operation program (46).

7. A robot simulation device as set forth in claim 6, wherein said robot-model operation controlling section corrects said robot operation program so as to correspond to said virtual position of said objective workpiece model detected in said workpiece-model position detecting section, and allows said robot model to simulate said bin picking motion in accordance with said robot operation program as corrected.

8. A robot simulation device as set forth in any one of claims 1 to 5, wherein said workpiece-model image generating section generates said virtual image, in a two-dimensional mode, of said plurality of workpiece models picked-up by said sensor model, based on three-dimensional data (54) of said workpiece models.

9. A robot simulation device as set forth in claim 8, wherein said workpiece-model position detecting section simulates a three-dimensional measurement relative to said objective workpiece model identified from said virtual image in said two-dimensional mode generated in said workpiece-model image generating section.

10. A robot simulation program used for simulating an operation of a robot having a vision sensor in an off-line mode, said program making a computer function as:
a) a working-environment model setting section (24) for arranging a sensor model (16M), a robot model (18M) and a workpiece model (20M), prepared respectively by modeling the vision sensor (16), the robot (18) and a workpiece (20), in a virtual working environment (22) in a state where a plurality of workpiece models are randomly piled; and
b) an operation simulating section (26) for allowing said sensor model and said robot model, arranged in said virtual working environment, to simulate a workpiece detecting operation and a bin picking motion, relative to said plurality of workpiece models arranged in said virtual working environment; said operation simulating section comprising:
a workpiece-model image generating section (28) for allowing said sensor model to simulate an image picking-up operation relative to said plurality of workpiece models, and generating a virtual image of said plurality of workpiece models;
a workpiece-model position detecting section (30) for identifying an objective workpiece model (20Mn) from among said virtual image of said plurality of workpiece models generated in said workpiece-model image generating section, and detecting a virtual position of said objective workpiece model; and
a robot-model operation controlling section (32) for allowing said robot model to simulate said bin picking motion relative to said objective workpiece model, based on said virtual position of said objective workpiece model detected in said workpiece-model position detecting section.

11. A computer readable recording medium used for simulating an operation of a robot having a vision sensor in an off-line mode, said recording medium recording a robot simulation program making a computer function as:
a) a working-environment model setting section (24) for arranging a sensor model (16M), a robot model (18M) and a workpiece model (20M), prepared respectively by modeling the vision sensor (16), the robot (18) and a workpiece (20), in a virtual working environment (22) in a state where a plurality of workpiece models are randomly piled; and
b) an operation simulating section (26) for allowing said sensor model and said robot model, arranged in said virtual working environment, to simulate a workpiece detecting operation and a bin picking motion, relative to said plurality of workpiece models arranged in said virtual working environment; said operation simulating section comprising:
a workpiece-model image generating section (28) for allowing said sensor model to simulate an image picking-up operation relative to said plurality of workpiece models, and generating a virtual image of said plurality of workpiece models;
a workpiece-model position detecting section (30) for identifying an objective workpiece model (20Mn) from among said virtual image of said plurality of workpiece models generated in said workpiece-model image generating section, and detecting a virtual position of said objective workpiece model; and
a robot-model operation controlling section (32) for allowing said robot model to simulate said bin picking motion relative to said objective workpiece model, based on said virtual position of said objective workpiece model detected in said workpiece-model position detecting section.

12. A robot simulation method for simulating an operation of a robot having a vision sensor in an off-line mode by using a computer, comprising:
a working-environment model setting step for arranging, by a working-environment model setting section (24) of the computer, a sensor model (16M), a robot model (18M) and a workpiece model (20M), prepared respectively by modeling the vision sensor (16), the robot (18) and a workpiece (20), in a virtual working environment (22) in a state where a plurality of workpiece models are randomly piled; and
an operation simulating step for allowing, by an operation simulating section (26) of the computer, said sensor model and said robot model, arranged in said virtual working environment, to simulate a workpiece detecting operation and a bin picking motion, relative to said plurality of workpiece models arranged in said virtual working environment;
said operation simulating step comprising the steps of:
allowing said sensor model to simulate an image picking-up operation relative to said plurality of workpiece models, and generating a virtual image of said plurality of workpiece models;
identifying an objective workpiece model (20Mn) from among said virtual image of said plurality of workpiece models as generated, and detecting a virtual position of said objective workpiece model; and
allowing said robot model to simulate said bin picking motion relative to said objective workpiece model, based on said virtual position of said objective workpiece model as detected.
